# EUROPÄISCHE PATENTSCHRIFT

(11) **EP 1 710 894 B1**
(45) Veröffentlichungstag und Bekanntmachung des Hinweises auf die Patenterteilung: **17.06.2009**
(21) Anmeldenummer: 05007807.0
(22) Anmeldetag: 08.04.2005
(51) Int. Cl.: H02K 5/173, F16C 27/06, F16C 35/077

(54) **Elektrische Maschine**
Electric machine
Machine électrique

(43) Veröffentlichungstag der Anmeldung: 11.10.2006
(73) Patentinhaber: Brose Fahrzeugteile GmbH & Co. KG, 97076 Würzburg (DE)
(72) Erfinder: Schulz, Hermann, 97355 Kleinlangheim (DE)
(74) Vertreter: Reinhard - Skuhra - Weise & Partner GbR

(56) Entgegenhaltungen:
- CH-A- 315 972
- DE-B- 1 254 915
- FR-A- 1 086 999
- GB-A- 412 491

## Beschreibung

Die Erfindung betrifft eine elektrische Maschine mit einem Rotor und einem Stator und mit einem Lager für den Rotor.

Elektrische Maschinen mit einem Rotor und einem Stator können zum einen als Generatoren zur Stromerzeugung und zum anderen als Antriebsmotoren verwendet werden. Im Falle einer unsachgemäßen Behandlung einer solchen elektrischen Maschine, beispielsweise durch Stoß oder Fall auf die Stirnseiten, kann es, bedingt durch das vergleichsweise hohe Eigengewicht des Rotors, zu irreversiblen Schäden kommen. Dabei spielt es keine Rolle, ob die Maschine beispielsweise stoßartig abgelegt wird oder aber aus geringer Höhe herabfällt. Wenn ein Lagerschild oder die Welle getroffen wird, bleiben Schäden, meistens an den Lagern, nicht aus. Eine weitere Ursache von Beschädigungen ist ein unsachgemäßer Transport, insbesondere bei Maschinen, die mit vertikal angeordneter Welle transportiert werden. Derartige Transportschäden treten insbesondere aufgrund von Schlaglöchern im Straßenbelag beziehungsweise durch Schienenstöße auf. Schließlich kann es auch durch hohe Axialbeschleunigungen beim Gebrauch der Maschine zur schweren Schäden kommen. Dies ist insbesondere dann der Fall, wenn die elektrische Maschine als Antrieb im Automobilbereich zum Einsatz kommt.

Die durch die genannten Ursachen hervorgerufenen Beschädigungen lassen sich nur äußerst schwer erkennen. Dies hat zur Folge, dass besonders bei Transport- oder Handhabungsschäden Maschinen mit schadhaften Lagern dennoch ihrem bestimmungsgemäßen Gebrauch zugeführt werden. In der Folge führt dies oft zum vorzeitigen Ausfall der Maschinen.

Die genannten Probleme können unter anderem durch besondere Achtsamkeit bei der Handhabung der Maschinen verhindert werden. Hierzu ist es erforderlich, spezielle Arbeitsanweisungen zu erteilen bzw. weitere Maßnahmen zu ergreifen, beispielsweise Personalschulungen. Zur Vermeidung von Transportschäden ist es bekannt, geeignete Verpackungen zu verwenden. Die Gefahr durch hohe Axialbeschleunigungen, insbesondere im Automobilbereich, kann durch die Einbaulage der elektrischen Maschine zum Teil kompensiert werden.

Allen bekannten Maßnahmen zur Vermeidung von Lagerschäden ist es gemeinsam, dass sie vergleichsweise aufwendig und/oder kostspielig sind. Kommt es dennoch zu Beschädigungen der Maschine und ist diese bereits eingebaut, ist eine aufwendige Nacharbeit, insbesondere der Austausch der Lager, oder aber der Austausch der gesamten elektrischen Maschine erforderlich.

Aus der CH 315 972 A ist eine Ausgleichsvorrichtung für in mehreren Wälzlagern gelagerte Wellen bekannt, bei der zu Begrenzung des Axialspiels und zur Dämpfung mechanischer Schwingungen in axialer Richtung ein Gummiring vorgesehen ist, der im unverformten Zustand einen kreisrunden Querschnitt aufweist.

Die GB 412 491 A beschreibt ein zur radialen Dämpfung einer in einem Kugellager gelagerten Welle verwendetes Dämpfungselement, dessen eine Seite an einem Anschlag des Kugellagers und dessen andere Seite an einer konischen Lagerbohrung anliegt.

Aus der DE 12 54 915 B ist ein Kugel- bzw. Rollenlager bekannt, bei dem als Dämpfungskörper zwischen zwei Teilringen des äußeren Laufrings eines Kugellagers ein Dämpfungskörper angeordnet ist, der aus einem Tragring besteht, an dessen beiden Seiten in ihrer Länge unterbrochene elastische Schichten angeordnet sind.

Eine Aufgabe der vorliegenden Erfindung ist es daher, Beschädigungen einer elektrischen Maschine durch axiale Belastungen auf einfache Art und Weise zu verhindern.

Diese Aufgabe wird durch eine elektrische Maschine nach Anspruch 1 gelöst.

Eine Grundidee der Erfindung ist es, zum Schutz der Lagerung einer elektrischen Maschine, insbesondere bei einer Lagerung mit einem oder mehreren Wälzlagern, ein Dämpfungselement mit Doppelfunktion vorzusehen. Diese Dämpfungselement dient zum einen zur Aufnahme axialer Belastungen der Lagerung und zum anderen zur Verringerung des Axialspiels der Lagerung. Dadurch wird zum einen eine besonders einfache und preiswerte Lösung bereitgestellt, um mögliche Folgen axialer Belastungen der Lagerung zu minimieren. Zum anderen erfolgt auch ein Ausgleich des Axialspiels, was die Laufruhe der Welle in der_Lagerung erhöht. Dies führt zu einem geringeren Verschleiß und damit zu einer Erhöhung der Lagerlebensdauer. Gleichzeitig werden Lagergeräusche verringert beziehungsweise vollständig vermieden. Insgesamt wird dadurch die Lebensdauer der elektrischen Maschine deutlich verlängert.

Das Dämpfungselement trägt bei einer axialen Belastung des Rotors zur Verringerung der Belastung der Lagerung durch Umwandlung von kinetischer Energie in Verformungsarbeit bei. Mit anderen Worten nimmt das Dämpfungselement die Energie des Aufpralls oder dergleichen auf, wobei es sich verformt und die zugeführte Energie zugleich in Wärme umwandelt. Anders ausgedrückt werden die auf die Lagerung wirkenden Belastungsspitzen durch langsames Abbremsen der Axialbewegung minimiert. Die dabei auftretende kinetische Energie wird in Verformungsarbeit und Wärme umgewandelt. Nach dem Aufschlag oder dergleichen wird die Lagerung vergleichsweise langsam in ihre Ausgangsposition zurückgestellt. Somit ist ein besonders sicherer Schutz der elektrischen Maschine auf einfach Art und Weise möglich.

Das Axialspiel des Rotors, welches in der Regel durch die einzelnen Bauteiltoleranzen beziehungsweise die Lagerluft selbst hervorgerufen wird, kann durch die Verwendung des erfindungsgemäßen Dämpfungselementes bis auf Null reduziert werden. Somit können insbesondere Axialschwingungen des Rotors im Magnetfeld vermieden werden, zu diesen der Rotor unter bestimmten Betriebszuständen neigt.

Das erfindungsgemäße Dämpfungselement weist einen im Wesentlichen dreieckigen Querschnitt auf. Dadurch wird eine zu starke Verformung des Dämpfungselementes bei sehr starken Belastungen wirkungsvoll verhindert.

Die Erfindung ist bei einer Vielzahl von elektrischen Maschinen einsetzbar. Besonders vorteilhaft ist jedoch der Einsatz der Erfindung bei Elektromotoren in Kraftfahrzeugen, beispielsweise bei einem Antrieb eines Kühlerlüfters.

Vorteilhafte Ausgestaltungen der Erfindung sind in den Unteransprüchen beschrieben.

Danach ist es besonders vorteilhaft, wenn das Dämpfungselement aus einem Kunststoffmaterial besteht, beispielsweise Gummi. Der Einsatz von Kunststoffen für das erfindungsgemäße Dämpfungselement ist besonders vorteilhaft, da Kunststoffbauteile besonders preiswert und in beliebiger Form herstellbar sind. Zum anderen lässt sich aufgrund der Vielzahl der vorhandenen Kunststoffe für jeden Anwendungsfall ein geeignetes Material finden, welches optimale Eigenschaften zur Aufnahme der auftretenden Kräfte und im Hinblick auf die die Umgebungsbedingungen, wie beispielsweise Temperatur, Medien (Säuren, Wasser usw.) etc. besitzt.

Entsprechend einer besonders vorteilhaften Ausführungsform der Erfindung ist das Dämpfungselement am Loslager der Lagerung angeordnet und dient dort zugleich zur Reduzierung der axialen Lagerluft. Zu diesem Zweck ist das Dämpfungselement vorteilhafterweise zwischen dem stehenden Außenring eines nicht axial fixierten Lagers (Loslagers) und einem hierfür vorgesehenen Axialanschlag des Lagersitzes des Loslagers angeordnet. Das Dämpfungselement wird somit nach Art einer an sich bekannten so gennanten "Kugellager-Ausgleichsscheibe" verwendet. Diese Ausgleichsscheiben, die u.a. auch als Wellscheiben zum Einsatz kommen, dienen bei bekannten Lagern zur Verringerung des Axialspieles. Sie sind jedoch nur bedingt zur Stoßdämpfung geeignet, da die maximal zulässigen Kräfte und Federwege bereits bei relativ geringen axialen Stößen erreicht werden.

Das Dämpfungselement kann in jeder Form vorliegen, welche den vorhandenen Einbauraum und die auftretenden Kräfte berücksichtigt. Gemäß der Erfindung umschließt das Dämpfungselement die Rotorwelle. Dabei weist das Dämpfungselement die Form eines einfachen Ringes auf. Die Ringform ist besonders gut geeignet, da sie sich den geometrischen Vorgaben des Lagers am besten anpasst. Darüber hinaus hat sie gegenüber mehreren einzeln angeordneten_Dämpfungselementen den Vorteil, dass kein zusätzlichen Halteelemente benötigt werden.

Das Dämpfungselement weist einen unsymmetrischen Querschnitt auf. Der Querschnitt hat im wesentlichen eine Dreiecksform, die insbesondere eine zu starke Verformung des Dämpfungselementes bei sehr starken Belastungen wirkungsvoll verhindert.

Besonders vorteilhaft ist es zudem, wenn das Dämpfungselement an seiner Mantelfläche verformbare Ausgleichselemente aufweist, insbesondere in Form von einer Anzahl von umlaufenden Stegen. Diese tragen dazu bei, die radialen Toleranzen auszugleichen. Sie dienen mit anderen Worten zu einer Vergrößerung des Durchmesser-Toleranzbereiches.

Die obere und untere Auflagefläche des Dämpfungselementes ist vorzugsweise an die Form der aufliegenden Bauteile angepasst. Eine gleichmäßige, glatte Auflagefläche ist dabei für eine besonders gleichmäßige Kraftaufnahme sinnvoll. Zur Realisierung hoher Verformungsgrade bei geringen Kräften ist das Dämpfungselement derart ausgebildet, dass beide Auflageflächen Nuten aufweisen und diese derart angeordnet sind, dass die Nutenböden gegeneinander versetzt sind. So lassen sich hohe Verformungsgrade bei geringen Kräften realisieren. Nutanzahl, Größe und Position sind dabei je nach Einsatzfall variierbar. Die sich ergebende Wellenform trägt zu einer weicheren Anstellung der Lagerung bei. Das erfindungsgemäße Dämpfungselement kann mit anderen Worten auch zur Anstellung der Lagerung verwendet werden.

Weist das Dämpfungselement sich gegenüberliegende Nuten auf, ist ein Ausweichen in die gegenüberliegende Nut nicht mehr möglich, was eine härtere Anstellung zur Folge hat.

Die vorliegende Erfindung wird nachfolgend anhand von Ausführungsbeispielen beschrieben, die mit Hilfe von Zeichnungen näher erläutert werden. Hierbei zeigen:
- FIG 1: eine schematische Darstellung einer elektrischen Maschine bei einem Aufschlag auf die Welle,
- FIG 2: eine schematische Darstellung einer elektrischen Maschine bei einem Aufschlag auf die Rückseite,
- FIG 3: ein Querschnitt durch ein in einem Lagersitz angeordnetes Wälzlager mit einem erfindungsgemäßen Dämpfungselement im entspannten Zustand,
- FIG 4: ein Querschnitt durch ein in einem Lagersitz angeordnetes Wälzlager mit einem erfindungsgemäßen Dämpfungselement im belasteten Zustand,
- FIG 5: ein teilweise aufgeschnittenes erstes Dämpfungselement,
- FIG 6: eine teilweise aufgeschnittenes zweites Dämpfungselement,
- FIG 7: ein drittes erfindungsgemäßes Dämpfungselement mit versetzten Nuten,
- FIG 8: ein viertes Dämpfungselement mit gegenüberliegenden Nuten.

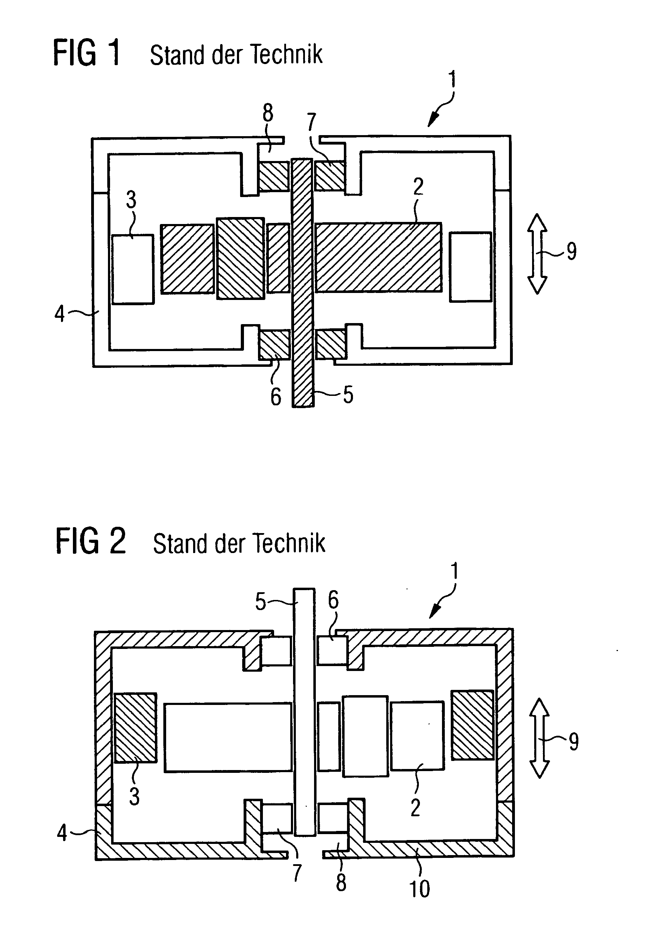

FIG 1 zeigt eine schematische Darstellung eines herkömmlichen Elektromotors 1 ohne das erfindungsgemäße Dämpfungselement, wie er als Antrieb für einen Kühlerlüfter in einem Kraftfahrzeug verwendet wird. Der Elektromotor 1 umfasst einen Rotor 2 und einen Stator 3, die in einem Gehäuse 4 angeordnet sind. Die Rotorwelle 5 liegt in einem Festlager 6 einerseits und in einem Loslager 7 andererseits ein, wobei das Festlager 6 axial gegen Verschiebung gesichert ist. Die Lager 6, 7 sind als Wälzlager ausgebildet. Das Axialspiel 8 des Rotors 2 wird dabei durch die Toleranzlage sowie die Lagerluft definiert. Bei einem Aufschlag auf die Rotorwelle 5 erfolgt eine Belastung des Lagers 6 in Axialrichtung 9. Dies hat eine Relativbewegung zwischen dem Rotor 2 einerseits und allen übrigen Bauteilen, insbesondere dem Stator 3 und dem Gehäuse 4, andererseits zur Folge.

FIG 2 illustriert einen Aufschlag auf die Rückseite 10 des Elektromotors 1. Auch hier erfolgt eine Relativbewegung zwischen den Hauptbaugruppen, wobei in diesem Fall der Rotor 2 mit dem Lagern 6, 7 bewegt wird.

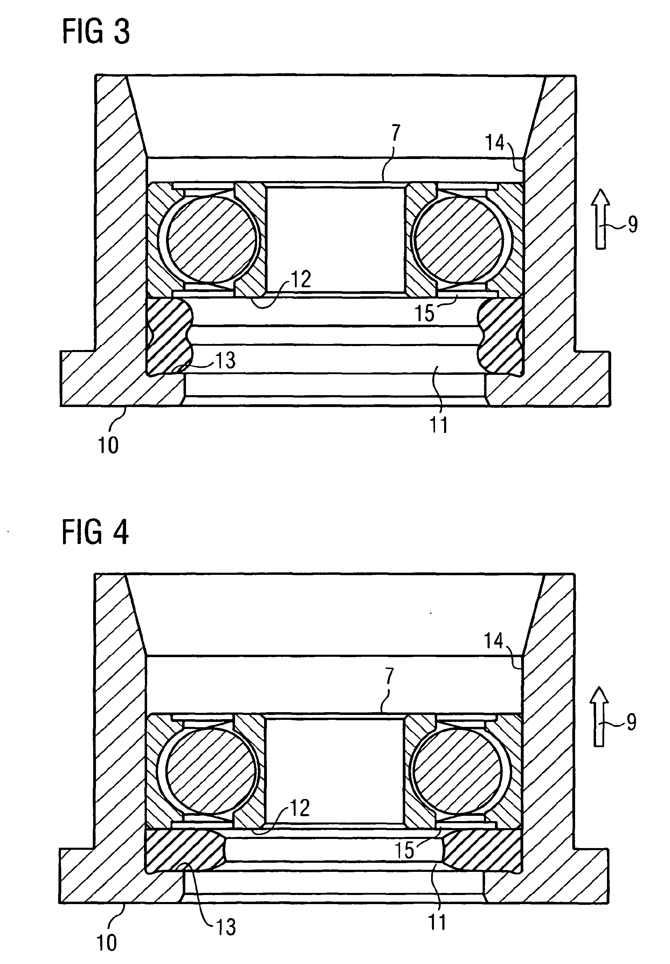

Zur Vermeidung axialer Belastungsspitzen auf die Lager 6, 7 wird nun an dem Loslager 7 des Elektromotors 1 ein erfindungsgemäßes Dämpfungselement 11 angebracht, wie in FIG 3 dargestellt. Dadurch muss das Festlager 6 nicht mehr axial gegen Verschiebung gesichert werden. Bei einer axialen Belastung der Lagerung kann sich mit anderen Worten der gesamte Rotor 2 axial verschieben, ohne dass es zu Beschädigungen kommt.

Das Dämpfungselement 11 ist zwischen dem Außenring 12 des Loslagers 7 einerseits und einem hierfür vorgesehenen Axialanschlag 13 des Lagersitzes 14 andererseits angeordnet. In der hier gezeigten Ausführungsform entspricht die Einbaulage des Dämpfungselementes 11 in etwa der Einbaulage einer Ausgleichsscheibe.

FIG 3 zeigt die Position des Dämpfungselementes 11 im entspannten Zustand. Bei einer Belastung des Loslagers 7 in Axialrichtung 9 erfolgt eine Verformung des Dämpfungselementes 11, vgl. FIG 4. Aufgrund der geometrischen Gegebenheiten, insbesondere der radialen Begrenzung des Bauraumes durch den Lagersitz 14 erfolgt dabei eine Quetschung des Dämpfungselements 11 in der Art, dass dieses in Axialrichtung 9 gestaucht wird und dadurch zugleich nach innen in Radialrichtung, also quer zur Axialrichtung 9, ausweicht.

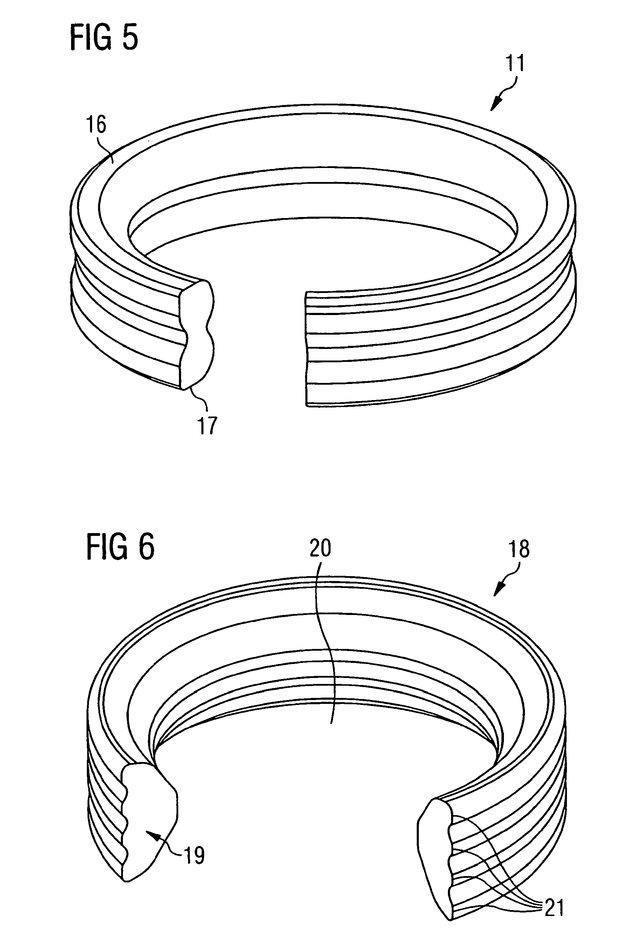

Je nach Bedarf und Platzverhältnis kann der Durchmesser und die Schnurstärke des Dämpfungselementes 11 frei gewählt werden. Dabei ist jedoch darauf zu achten, dass besonders bei einer axialen Belastung die das Innere des Loslagers 7 verschließende Deckscheibe 15 nicht durch das Dämpfungselement 11 deformiert wird. In den FIG 5 bis 8 sind verschiedene Dämpfungselemente beispielhaft gezeigt, wobei die FIG 5, 6 und 8 Beispiele darstellen ,die nicht Teil der beanspruchten Erfindung sind.

Das in FIG 5 dargestellte ringförmige Dämpfungselement 11 weist einen symmetrischen Querschnitt auf, wie er sich durch eine Kombination zweier übereinander angeordneter "O-Ringe" ergibt. Zur Verdeutlichung ist aus dem Dämpfungselement ein Ringsegment herausgeschnitten. Die obere Auflagefläche 16 und die untere Auflagefläche 17 des Dämpfungselements 11 ist gleichmäßig glatt, so dass das Dämpfungselement 11 im eingebauten Zustand vollflächig auf dem Außenring 12 des Loslagers 7 einerseits und an dem Axialanschlag 13 des Lagersitzes 14 andererseits aufliegt. Durch die lang gestreckte Querschnittsform wird ein vergleichsweise langer Federweg und damit eine erhöhte Dämpfung erreicht.

Das in FIG 6 dargestellte Dämpfungselement 18 weist einen dreieckigen Querschnitt auf, wobei der Außenmantel 19 des Dämpfungselements 18 im wesentlichen eben ist, während der Querschnitt in Richtung Ringmitte 20 mehr oder weniger spitz zuläuft. Zur Verdeutlichung ist aus dem Dämpfungselement 18 wiederum ein Ringsegment herausgeschnitten. Durch die Dreiecksform des Querschnittes wird ein mittiges Ausknicken des Dämpfungselements 18 bei hohen Belastungen wirkungsvoll verhindert.

Das in FIG 6 gezeigte Dämpfungselement 18 weist an der Fläche eines Außenmantels 19 verformbare Ausgleichselemente in Form von umlaufenden Stegen 21 auf. Die Stege 21 ragen im montierten Zustand in Richtung des Lagersitzes 14 und verringern somit das radiale Lagerspiel.

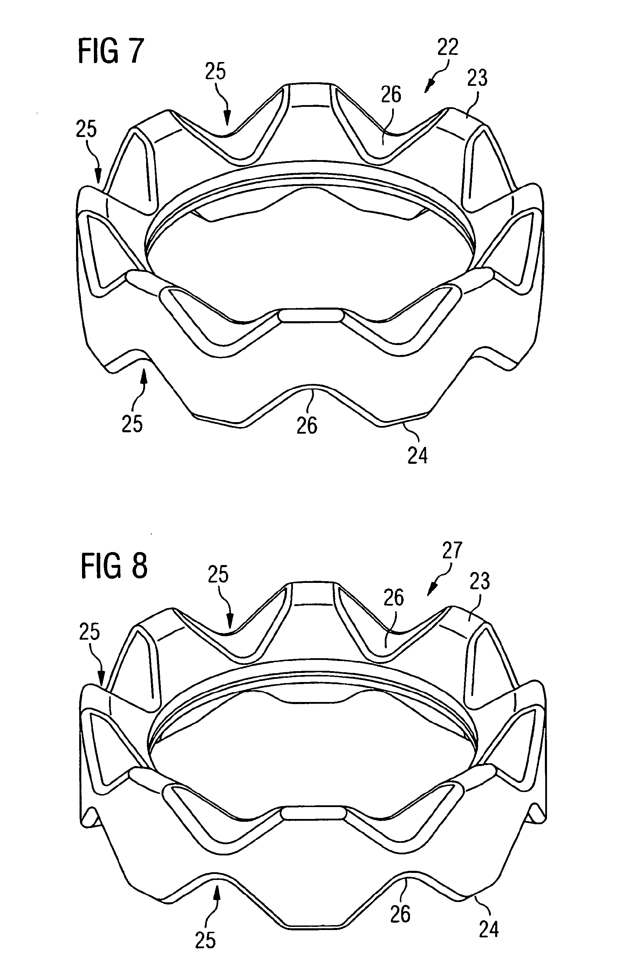

Das in FIG 7 dargestellte erfindungsgemäße Dämpfungselement 22 weist an seiner oberen und seiner unteren Auflagefläche 23, 24 eine Anzahl von Nuten 25 auf. Die Nuten 25 sind dabei gleichmäßig verteilt derart, dass sich die Nutenböden 26 und die verbleibenden Reste der Auflageflächen 23, 24 abwechseln. Die Nuten 25 an der oberen Auflagefläche 23 sind dabei zu den Nuten 25 an der unteren Auflagefläche 24 versetzt angeordnet, so dass sich hohe Verformungsgrade bei geringen Kräften realisieren lassen.

Das in FIG 8 dargestellte Dämpfungselement 27 weist ebenfalls an beiden Auflageflächen 23, 24 Nuten 25 auf. Diese liegen sich jedoch gegenüber, so dass ein Ausweichen in die jeweils gegenüberliegende Nut nicht mehr möglich ist.

## Patentansprüche

1. Elektrische Maschine (1), mit einem Rotor (2), einem Stator (3), einer Lagerung (6, 7) für den Rotor (2) und einem das Axialspiel (8) der Lagerung (6, 7) verringernden Dämpfungselement (11, 18, 22, 27) zur Aufnahme axialer Belastungen der Lagerung (6, 7), wobei das Dämpfungselement (11, 18, 22, 27) eine Ringform aufweist und die Rotorwelle (5) umschließt, **dadurch gekennzeichnet, dass** das Dämpfungselement (11, 18, 22, 27) einen im Wesentlichen dreieckigen Querschnitt aufweist, wobei beide Auflageflächen (23, 24) des Dämpfungselementes (11, 18, 22, 27) Nuten (25) aufweisen und die Nutenböden (26) gegeneinander versetzt sind.

2. Elektrische Maschine (1) nach Anspruch 1, wobei das Dämpfungselement (11, 18, 22, 27) aus einem Kunststoffmaterial besteht.

3. Elektrische Maschine (1) nach Anspruch 1, wobei das Dämpfungselement am Loslager (7) der Lagerung (6, 7) angeordnet ist.

4. Elektrische Maschine (1) nach Anspruch 3, wobei das Dämpfungselement (11, 18, 22, 27) zwischen dem Außenring (12) des Loslagers (7) und einem Axialanschlag (13) am Lagersitz (14) des Loslagers (7) angeordnet ist.

5. Elektrische Maschine (1) nach einem der Ansprüche 1 bis 4, wobei das Dämpfungselement (11, 18, 22, 27) an seiner Mantelfläche (19) verformbare Ausgleichselemente (21) aufweist.

## Claims

1. Electric machine (1), with a rotor (2), a stator (3), a bearing system (6, 7) for the rotor (2) and a cushioning element (11, 18, 22, 27) reducing the axial play (8) of the bearing system (6, 7) to absorb axial loading of the bearing system (6, 7), with the cushioning element (11, 18, 22, 27) having a ring shape and enclosing the rotor shaft, **characterized in that** the cushioning element (11, 18, 22, 27) has an essentially triangular cross-section, with both bearing surfaces (23, 24) of the cushioning element (11, 18, 22, 27) having grooves (25) and the groove bases (26) being offset in respect of each other.

2. Electric machine (1) according to claim 1, with the cushioning element (11, 18, 22, 27) being made of a plastic material.

3. Electric machine (1) according to claim 1, with the cushioning element being disposed on the floating bearing (7) of the bearing system (6, 7).

4. Electric machine (1) according to claim 3, with the cushioning element (11, 18, 22, 27) being disposed between the outer ring (12) of the floating bearing (7) and an axial stop (13) on the bearing seat (14) of the floating bearing (7).

5. Electric machine (1) according to one of claims 1 to 4, with the cushioning element (11, 18, 22, 27) having deformable equalizing elements (21) on its lateral surface (19).

## Revendications

1. Machine électrique (1) comprenant un rotor (2), un stator (3), un ensemble palier (6, 7) pour le rotor (2) et un élément amortisseur (11, 18, 22, 27) réduisant le jeu axial (8) de l'ensemble palier 6, 7), destiné à absorber les contraintes axiales de l'ensemble palier (6, 7), l'élément amortisseur (11, 18, 22, 27) présentant une forme annulaire et entourant l'arbre (5) du rotor, **caractérisée en ce que** l'élément amortisseur (11, 18, 22, 27) présente une section sensiblement triangulaire, les deux surfaces de portée (23, 24) de l'élément amortisseur (11, 18, 22, 27) présentant des encoches (25) et les fonds (26) des encoches étant décalés les uns par rapport aux autres.

2. Machine électrique (1) selon la revendication 1, dans laquelle l'élément amortisseur (11, 18, 22, 27) est fait d'une matière synthétique.

3. Machine électrique (1) selon la revendication 1, dans laquelle l'élément amortisseur est disposé au niveau du palier libre (7) de l'ensemble palier (6, 7).

4. Machine électrique (1) selon la revendication 3, dans laquelle l'élément amortisseur (11, 18, 22, 27) est disposé entre la bague extérieure (12) du palier libre (7) et une butée axiale (13) solidaire du logement (14) du palier libre (7).

5. Machine électrique (1) selon une des revendications 1 à 4, dans laquelle l'élément amortisseur (11, 18, 22, 27) présente des éléments compensateurs déformables (21) sur sa surface latérale (19).
